# EUROPEAN PATENT APPLICATION

(11) **EP 4 618 200 A1**
(43) Date of publication of application: **17.09.2025**
(21) Application number: 25163097.6
(22) Date of filing: 11.03.2025
(51) Int. Cl.: H01M 4/66, H01M 4/74, H01M 10/04, H01M 10/0525, H01M 10/0587, H01M 10/42, H01M 50/533, H01M 50/538

(54) **ELECTRODE FOR SECONDARY BATTERY, ELECTRODE ASSEMBLY FOR SECONDARY BATTERY COMPRISING THE SAME, AND SECONDARY BATTERY COMPRISING THE SAME**

(30) Priority: 12.03.2024 KR 20240034516; 24.12.2024 KR 20240194977
(71) Applicant: SK On Co., Ltd., Seoul 03161 (KR)
(72) Inventor: SHIN, Jae Sik, 34124 Daejeon (KR); SON, Hye Been, 34124 Daejeon (KR); OH, Won Je, 34124 Daejeon (KR)
(74) Representative: Stolmár & Partner Patentanwälte PartG mbB

(57) **Abstract**

The present disclosure relates to an electrode for a secondary battery, an electrode assembly for the secondary battery including the same, and the secondary battery including the same. An electrode for a secondary battery according to an embodiment includes an electrode plate including a conductive material and having a shape of a sheet with a predetermined thickness, and an electrode active material layer formed on at least one surface of the electrode plate, wherein the electrode plate comprises a coating portion where the electrode active material layer is formed, and an uncoated portion formed on at least one edge of the electrode plate outside the coating portion, and wherein a pattern region including one or more connecting portions arranged in a first direction and extending in the first direction is formed on at least a portion of the uncoated portion.

## Description

### BACKGROUND OF THE INVENTION

### 1. Field

The present disclosure relates to an electrode for a secondary battery, an electrode assembly for the secondary battery including the same, and the secondary battery including the same.

### 2. Description of the Related Art

Along with the global warming issue, which is a concern in modern society, the demand for eco-friendly technologies is increasing rapidly to deal with this issue. In particular, as the technological demand for electric vehicles and energy storage systems (ESS) increases, the demand for secondary batteries, which are in the spotlight as energy storage means, is explosively increasing, and in particular, the demand for high-capacity secondary batteries has been being exploded.

Due to recent fire or explosion accidents which occurred during the use of secondary batteries, social concerns about the safety of secondary battery use are increasing. Based on these social concerns, various attempts to secure the safety and stability of secondary batteries have recently been proposed.

In response to the demand for the development of high-capacity secondary batteries, the size and density of each battery cell constituting the secondary batteries are being increased. However, in such cases, if a safety accident occurs, it may cause a more fatal safety problem than before.

### SUMMARY OF THE INVENTION

An object of the present disclosure is to provide an electrode for a secondary battery and an electrode assembly for the secondary battery that may quickly and efficiently induce fusing of an electrode when an overvoltage or an overcurrent occurs, thereby preventing occurrence of an additional accident event.

Another object of the present disclosure is to provide a secondary battery with improved safety and stability.

The present disclosure can be widely applied in the fields of electric vehicles, battery charging stations, and other green technologies such as photovoltaics and wind power using batteries. In addition, the present disclosure may be used in eco-friendly mobility, including electric vehicles and hybrid vehicles, to prevent climate change by suppressing air pollution and greenhouse fluid emissions.

An electrode for a secondary battery according to embodiments of the present disclosure may include an electrode plate including a conductive material and having a shape of a sheet with a predetermined thickness, and an electrode active material layer formed on at least one surface of the electrode plate, wherein the electrode plate comprises a coating portion where the electrode active material layer is formed, and an uncoated portion formed on at least one edge of the electrode plate outside the coating portion, and wherein a pattern region including one or more connecting portions arranged in a first direction and extending in the first direction is formed on at least a portion of the uncoated portion.

The electrode plate may include aluminum.

The pattern region may further include one or more cutout portions penetrating the electrode plate, the one or more connecting portions may include a plurality of connecting portions included in the pattern region, and two adjacent connection portions among the plurality of connecting portions may be spaced apart from each other in the first direction by one of the one or more cutout portions.

The uncoated portion may include a base portion having a predetermined width along a first boundary between the coating portion and the uncoated portion, and one or more flags extending from the base portion in a second direction away from the first boundary, and at least a portion of the pattern region may be formed at the base portion.

The base portion may include a first region located along the first boundary and defined to have a width of 50% to 60% of the predetermined width, and a second region except the first region, and at least a portion of the pattern region may be formed at the second region.

The uncoated portion may include a base portion having a predetermined width along a first boundary between the coating portion and the uncoated portion, and one or more flags extending from the base portion in a second direction away from the first boundary, and at least a portion of the pattern region may be formed on at least one of the one or more flags.

The uncoated portion may include a base portion having a predetermined width along a first boundary between the coating portion and the uncoated portion, and one or more flags extending from the base portion in a second direction away from the first boundary, and the pattern region may be formed along a second boundary between the base portion and the one or more flags.

Each of the plurality of connecting portions may have a width defined by a length based on the first direction and a height defined by a length based on a direction perpendicular to the first direction.

When a current greater than or equal to a predetermined reference current value passes through the uncoated portion, at least one of the plurality of connecting portions may be disconnected.

A value A defined by Relational Formula 1 may be of 1.89×10⁷ A/m to 4.25×10⁷ A/m: $A = \frac{L \times I}{c \times f} ,$ where L is a height of each of the plurality of connecting portions, c is a thickness of the electrode plate in the pattern region, f is a sum of widths of all of the plurality of connecting portions, and I is a reference current value.

An electrode assembly for a secondary battery according to embodiments of the present disclosure may include a first electrode; a second electrode; and a first separator interposed between the first electrode and the second electrode, wherein the first electrode, the first separator, and the second electrode are wound around a virtual winding axis, wherein the first electrode comprises a first electrode plate including a conductive material and having a shape of a sheet with a predetermined thickness, and a first electrode active material layer formed on at least one surface of the first electrode plate, wherein the first electrode plate comprises a first coating portion where the first electrode active material layer is formed, and a first uncoated portion formed on at least one edge of the first electrode plate outside the first coating portion, and wherein a pattern region including one or more connecting portions arranged along a first direction and extending in the first direction is formed on at least a portion of the first uncoated portion.

The first electrode plate may include aluminum.

The first uncoated portion may include a first base portion having a predetermined width along a first boundary between the first coating portion and the first uncoated portion, and one or more first flags extending from the first base portion in a second direction away from the first boundary, and at least a portion of the pattern region may be formed at the first base portion.

The pattern region may further include at least one cutout portion penetrating the first electrode plate, the one or more connecting portions may include a plurality of connecting portions included in the pattern region, and two adjacent connecting portions among the plurality of connecting portions may be spaced apart from each other in the first direction by one of the one or more cutout portions.

Each of the plurality of connecting portions may have a width defined by a length based on the first direction and a height defined by a length based on a direction perpendicular to the first direction.

When a current greater than or equal to a predetermined reference current value passes through the first uncoated portion, at least one of the plurality of connecting portions may be disconnected.

A value A defined by Relational Formula 1 may be from 1.89×10⁷ A/m to 4.25×10⁷ A/m: $A = \frac{L \times I}{c \times f} ,$ where L is a height of each of the plurality of connecting portions, c is a thickness of the first electrode plate in the pattern region, f is a sum of widths of the plurality of connecting portions, and I is a reference current value.

A secondary battery according to embodiments of the present disclosure may include the electrode assembly for the secondary battery according to the present disclosure.

### BRIEF DESCRIPTION OF THE DRAWINGS

FIG. 1 is a diagram illustrating an example of an electrode for a secondary battery according to an embodiment of the present disclosure.
FIG. 2 is a diagram showing an example of an electrode for a secondary battery of FIG. 1 as viewed from a different direction.
FIG. 3 is a diagram illustrating an example of an electrode for a secondary battery according to another embodiment of the present disclosure.
FIG. 4 is a diagram illustrating an example of an electrode for a secondary battery according to another embodiment of the present disclosure.
FIG. 5 is a diagram illustrating an example of an electrode for a secondary battery according to another embodiment of the present disclosure.
FIG. 6 is an enlarged view of an area A1 of FIG. 1.
FIG. 7 is a diagram illustrating an example of an electrode for a secondary battery according to another embodiment of the present disclosure.
FIG. 8 is a diagram illustrating an example of an electrode for a secondary battery according to another embodiment of the present disclosure.
FIG. 9 is an enlarged view of an area A2 of FIG. 6.
FIG. 10 is a diagram illustrating an example before winding is completed in an electrode assembly for a secondary battery according to an embodiment of the present disclosure.
FIG. 11 is a diagram illustrating an example in which winding is completed in an electrode assembly for a secondary battery according to an embodiment of the present disclosure.
FIG. 12 is a diagram illustrating an example of an electrode assembly for a secondary battery according to another embodiment of the present disclosure.
FIG. 13 is a diagram illustrating an example of a battery cell constituting a secondary battery according to an embodiment of the present disclosure.
FIG. 14 is a diagram illustrating an example of a cross section in an area B of the battery cell of FIG. 13.

### DETAILED DESCRIPTION

Hereinafter, the present invention will be described in detail with reference to the accompanying drawing. However, those skilled in the art will appreciate that such embodiments described with reference to the accompanying drawing are provided to further understand the spirit of the present invention and do not limit subject matters to be protected as disclosed in the detailed description and appended claims. Furthermore, throughout the disclosure, unless otherwise particularly stated, the word "comprise", "include", "contain", or "have" does not mean the exclusion of any other constituent element, but means further inclusion of other constituent elements, and elements, materials, or processes which are not further listed are not excluded.

Being equal or uniform in this specification may mean being equal or uniform to each other within an acceptable margin of error unless otherwise specified. For example, the fact that certain components or physical property measurement values are the same may include the meaning that the two objects to be compared are not only completely the same, but also the same within the error range. On the other hand, the fact that certain physical property measurement values are the same may mean that the difference in measurement values between objects is approximately less than 5%, specifically less than 3%, and more specifically less than 1%.

In this specification, that the angles formed by the two objects are perpendicular or parallel or parallel to each other may include not only being geometrically perpendicular or parallel, but also being within a slight error range.

The numerical range used in the present disclosure comprises all values within the range comprising the lower limit and the upper limit, increments logically derived in a form and spanning in a defined range, all double limited values, and all possible combinations of the upper limit and the lower limit in the numerical range defined in different forms.

Unless otherwise defined herein, "about" may be considered a value within 30%, 25%, 20%, 15%, 10%, or 5% of the stated value.

The use of terms such as "first", "second", "third", and the like before a certain component herein is only intended to avoid confusion of the referring component, and is not related to the order, importance, or subject matter relationship between the components. For example, an invention that includes only a second component without a first component may also be implemented.

In this specification, the "X direction", "Y direction", and "Z direction" may be described based on a spatial orthogonal coordinate system with X, Y, and Z axes orthogonal to each other. Unless otherwise specified, the Z direction may refer to a height direction, the X direction may refer to any one of directions perpendicular to the height direction, and the Y direction may refer to directions perpendicular to the Z direction and the X direction. The X-direction, Y-direction, and Z-direction mentioned below are for explanation so that the present disclosure may be clearly understood, and of course, the directions may be defined differently depending on where the reference is placed.

In this specification, the term "electrically connected" may mean, without limitation, any connection method by which a plurality of objects may be connected to each other so as to be in electrical communication with each other, and may be implemented in various aspects such as direct connection of a plurality of objects connected to each other or connection through a third object.

A configuration defined herein as a "portion" may mean, without limitation, a single component or a set of two or more identical or similar components having common functional aspects, and the set of components may be configured by combining hardware and/or software without limitation.

As used herein, arranged" may mean, without limitation, a positional relationship by which one object may be positioned adjacent to another object. By way of non-limiting example, it may mean coating one object with another object, adhering one object to another object via an adhesive material, applying heat, pressure, or the like, or simply positioning or fixedly positioning at least a portion of one object within any space so as to abut at least a portion thereof.

In this specification, the term "covering" one object by another object may mean, without limitation, a functional or constructive relationship in which one object is disposed at least adjacent to another object, so as to block or mitigate any external factors that may be applied to another object.

As used herein, the term "secondary battery" may refer to a battery that generates electrical energy through oxidation and reduction reactions when ions, specifically cations such as lithium ions, are inserted and removed from the positive and negative electrodes. Specifically, the "secondary battery" may mean any one of a lithium cobalt battery, a lithium high nickel battery, a lithium iron phosphate battery, a lithium ion battery, a lithium polymer battery, a lithium sulfur battery, a nickel hydrogen battery, a nickel cadmium battery, a sodium battery, and an all-solid-state battery. Exemplarily, the term "secondary battery" as used herein may mean, but is not necessarily limited to, a lithium ion secondary battery.

As used herein, the term "battery assembly" may be a generic term for battery modules or battery packs. Therefore, the battery assembly according to the present disclosure may not only refer to a battery module, but also a battery pack which omits a battery module structure and accommodates a plurality of battery cells, such as a Cell to Pack (CTP).

As used herein, the term "battery cell" may refer to a basic unit of the above-described secondary battery which can charge and discharge electrical energy, including an electrode assembly, an electrolyte, and an exterior material as main components.

Hereinafter, the present disclosure will be described in detail. This is, however, illustrative only and not intended to limit the disclosure to the specific embodiments illustratively described.

### Electrode for secondary battery

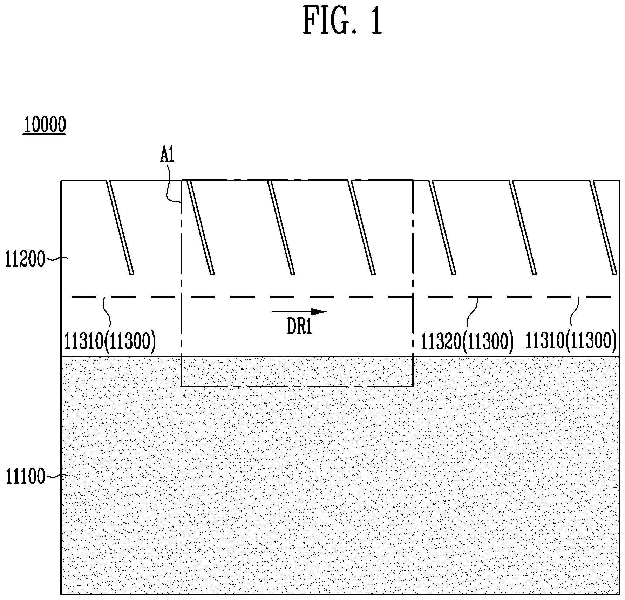

FIG. 1 is a diagram illustrating an example of an electrode for a secondary battery according to an embodiment of the present disclosure.

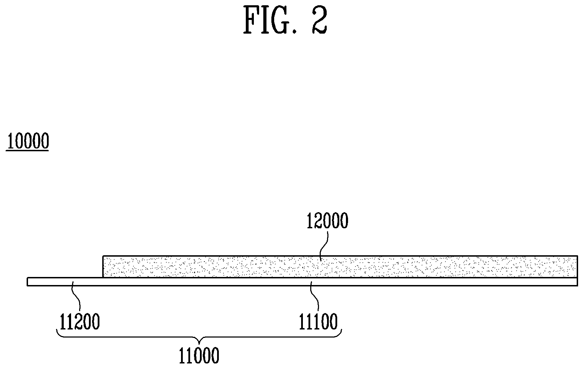

FIG. 2 is a diagram showing an example of an electrode for a secondary battery of FIG. 1 viewed from a different direction.

Referring to FIGS. 1 and 2, an electrode 10000 for a secondary battery according to an embodiment of the present disclosure includes: an electrode plate 11000 including a conductive material and having a shape of a sheet with a predetermined thickness; and an electrode active material layer 12000 formed on at least one surface of the electrode plate 11000. The electrode plate 11000 includes a coating portion 11100, where the electrode active material layer 12000 is formed, and an uncoated portion 11200 formed on at least one edge of the electrode plate 11000 outside the coating portion 11100. A pattern region 11300 including one or more connecting portions 11310 arranged in a first direction DR1, and extending in the first direction DR1 may be formed on at least a part of the uncoated portion 11200.

In an embodiment, the electrode 10000 for the secondary battery according to an embodiment of the present disclosure may include the electrode plate 11000 and the electrode active material layer 12000 formed on at least one surface of the electrode plate 11000. The electrode active material layer 12000 may be formed as an electrode active material layer on at least one surface of the electrode plate by stacking an electrode active material, which is described below, in a form of a layer on at least one surface of the electrode plate 11000.

As described below, in one embodiment, the electrode plate 11000 may include a known conductive material to an extent that any chemical reaction may not be caused in the secondary battery.

In an embodiment, the electrode plate 11000 may be in the form of a sheet with a predetermined thickness. In an exemplary embodiment, the electrode plate 11000 may be in the form of a sheet having a rectangular cross-section (a wide surface) having approximately long and short edges. However, as described below, the electrode plate 11000 may have a macroscopically approximately rectangular cross section, and microscopically, may have various shapes such as a flag shape.

As described below, in one embodiment, the electrode active material layer 12000 may include an electrode active material which includes a material into and from which lithium ions are inserted and removed.

In an embodiment, the electrode active material layer 12000 may be stacked on at least one surface of the electrode plate 11000. In an embodiment, the electrode active material layer 12000 may be stacked on at least a part of at least one surface of the electrode plate 11000.

Referring to FIG. 1, the electrode plate 11000 may include the coating portion 11100, where the electrode active material layer 12000 is formed, and the uncoated portion 11200 formed on the edge of the electrode plate 11100 outside the coating portion 11100.

In this embodiment, a region of the electrode plate 11000 where the electrode active material layer 12000 is stacked, that is, a region of the electrode plate 1100 which is in contact with the electrode active material layer 12000 on may be defined as the coating portion 11100.

In an embodiment, the uncoated portion 11200 may mean a region other than the region defined as the coating portion 11100 in the electrode plate 11000. In an embodiment, the uncoated portion 11200 may mean a region of the electrode plate 11000 in which both surfaces are exposed to the outside, or may mean a region in which the electrode active material layer 12000 is not formed on any one surface.

Referring to FIG. 1, the uncoated portion 11200 may be formed on one edge of the electrode plate 11000 outside the coated portion 11100.

FIG. 1 illustrates an example of an aspect in which the coating portion 11100 and the uncoated portion 11200 are formed. As shown in FIG. 1, for example, the uncoated portion 11200 may have a constant width along one edge of the electrode plate 11000, and more specifically, one of the edges of the electrode plate 11000. In other words, this may mean that the electrode active material layer 12000 is not formed in a region having the constant width along one edge (or a long edge) of the electrode plate 11000 on at least one surface of the electrode plate 11000.

In an embodiment, the pattern region 11300 including one or more connecting portions 11310 arranged in the first direction DR1, and extending in the first direction DR1 may be formed on at least a portion of the uncoated portion 11200. Detailed configurations of the above-described connecting portion 11310 and the pattern region 11300 including the connecting portion 11310 are described below.

In an embodiment, the electrode 10000 for the secondary battery may be a positive electrode or a negative electrode.

In an embodiment, when the electrode 10000 for the secondary battery is a positive electrode, the electrode 10000 may include a positive electrode plate and a positive electrode active material layer.

The positive electrode plate may include a known conductive material to an extent that any chemical reaction may not be caused in the secondary battery. The positive electrode plate may include, for example, one of stainless steel, nickel (Ni), aluminum (Al), titanium (Ti), copper (Cu), and alloys thereof, and may be provided in various forms such as a film, a sheet, and a foil.

In the above embodiment, the electrode plate 11000 may include one of stainless steel, nickel (Ni), aluminum (Al), titanium (Ti), copper (Cu), and alloys thereof, and may be provided in various forms such as a film, a sheet, and foil. In a specific embodiment, the electrode plate 11000 may include aluminum. In a more specific embodiment, the electrode plate 11000 may be essentially composed of aluminum.

On the other hand, in the case of a lithium secondary battery, the positive electrode active material contained in the above positive electrode active material layer may include a material into and from which lithium ions are inserted and removed. The positive electrode active material may be, for example, a lithium metal oxide.

According to exemplary embodiments, the positive electrode active material may include a lithium-transition metal composite oxide. In a specific example, the positive electrode active material may include a lithium-nickel metal composite oxide. The lithium-nickel metal composite oxide may further include at least one of cobalt (Co), manganese (Mn), and aluminum (Al).

In some embodiments, the positive electrode active material or the lithium-nickel metal composite oxide may include a layered structure or a crystal structure represented by the following Formula 1.

[Formula 1] LiₓNiₐMₚO_{2+z}

In Formula 1, 0.9≤x≤1.2, 0.6≤a≤0.99, 0.01≤b≤0.4, and -0.5≤z≤0.1 may be satisfied. As mentioned above, M may include Co, Mn and/or Al.

The chemical structure represented by Formula 1 represents the bonding relationship included in the layered structure or the crystal structure of the positive electrode active material and does not exclude other additional elements. For example, M may include Co and/or Mn, and Co and/or M may be provided together with Ni as ta main active element of a first electrode active material. Formula 1 is provided to express the bonding relationship of the above main active element and should be understood in a way that encompasses the introduction and substitution of additional elements.

In an exemplary embodiment, the positive electrode active material or the lithium-nickel metal composite oxide may include a layered structure or a crystal structure represented by the following Formula 1-1.

[Formula 1-1] LiₓNiₐM1_{b1}M2_{b2}O_{2+z}

In Formula 1-1, M1 may include Co, Mn, and/or Al. M2 may include the auxiliary elements as described above. In Formula 1-1, 0.9≤x≤1.2, 0.6≤a≤0.99, 0.01≤b1+b2≤0.4, and -0.5≤z≤0.1 may be satisfied.

In an embodiment, the positive electrode active material may include a lithium metal oxide. Specifically, the positive electrode active material may include the above-described lithium-nickel metal composite oxide, a lithium iron phosphate (LFP)-based oxide expressed by the formula 'LiFePO₄', or a lithium cobalt (LCO)-based oxide expressed by the formula 'LiCoO₂'.

In an embodiment, when the electrode 10000 for the secondary battery is a negative electrode, the electrode 10000 may include a negative electrode plate and a negative electrode active material layer.

The negative electrode plate may include a known conductive material to an extent that any chemical reaction may not be caused in the secondary battery. The negative electrode plate may include, for example, one of stainless steel, nickel (Ni), aluminum (Al), titanium (Ti), copper (Cu), and alloys thereof, and may be provided in various forms such as a film, a sheet, and foil. In a specific embodiment, the negative electrode plate may be copper.

On the other hand, in the case of a lithium secondary battery, the negative electrode active material included in the above negative electrode active material layer may include a material into and from which lithium ions are inserted and removed. The negative electrode active material may include, for example, one of or a combination of carbon-based materials such as crystalline carbon, amorphous carbon, carbon composite, and carbon fibers, lithium alloys, lithium metal, silicon (Si), and tin (Sn).

In an exemplary embodiment, the electrode 10000 may be a positive electrode. However, the present disclosure is not necessarily limited thereto, and if necessary, the electrode 10000 may be a negative electrode. As described below, depending on the electrical resistance or melting point of the material included in the electrode plate 11000, the electrode 10000 may be applied as a positive electrode, a negative electrode, or both a positive electrode and a negative electrode.

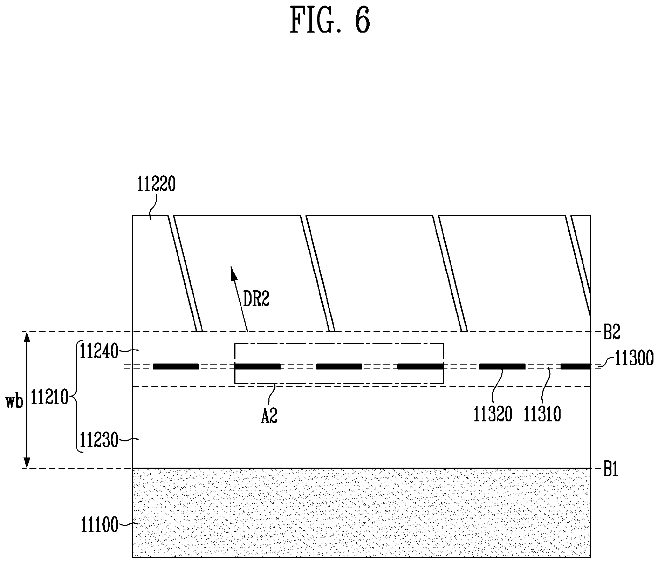

Referring to FIG. 1 and FIG. 6 to be described below, in an embodiment, the pattern region 11300 may be formed on at least a portion of the uncoated portion 11200. In an embodiment, the pattern region 11300 may include one or more connecting portions 11310 arranged in the first direction DR1. As described below, the pattern region 11300 may further include one or more cutout portion 11320 penetrating the electrode plate 11000, and the connecting portion 11310 and the cutout 11320 may be formed in an arbitrary pattern in the first direction DR1.

In an embodiment, the pattern region 11300 may be defined as an electrically-vulnerable region in which an electrical disconnection may be induced as the connecting portion 11310 breaks when a current greater than or equal to a predetermined reference current value or more passes through the electrode plate 11000, as described below. In this aspect, the pattern region 11300 may be defined as a region which functions as a fuse in a manner that at least a part of the region breaks when the current greater than or equal to the predetermined reference current value passes through the electrode plate 11000.

In an embodiment, the pattern region 11300 may extend in the first direction DR1. The direction may be arbitrary, but may be any one-dimensional vector, including, for example, a straight or curved path.

In an embodiment, the pattern region 11300 may mean a region including a shape such as a cut line extending in the first directions DR1 so as to extend in the first direction DR1.

In one embodiment, the one or more connecting portions 11310 may be arranged in the extension direction of the pattern region 11300. Each of the connecting portions 11310 may also be defined as a portion of the electrode plate 11000 which remains in the pattern region 11300. In an exemplary embodiment, each of the one or more connecting portions 11310 may be configured such that a width relative to a direction through which a current passes may be at least less than a width of the entire uncoated portion 11200.

In such embodiments, when a current passes through the electrode plate 11000, the current may pass through the connecting portion 11310 with a smaller width which is included in the pattern region 11300. As the width of the connecting portion 11310 is small, the width of the path through which the current passes at the corresponding position is narrowed, so that an electrical disconnection occurs when the current exceeds a desired value.

In an embodiment, the pattern region 11300 may connect both ends of the uncoated portion 11200.

In an exemplary embodiment, as shown in FIG. 1, the pattern region 11300 may connect both ends in a direction transverse to the uncoated portion 11200 with respect to the extension direction of the uncoated portion 11200.

In another exemplary embodiment, the pattern region 11300 may connect any two or more of the ends of the uncoated portion 11200 except the end which is in contact with the coating portion 11100.

As described above, the electrode plate 11000 may be in the form of a sheet with a predetermined thickness, and may be, for example, in the shape of a sheet having an approximately rectangular cross-section (a wide surface) having long and short edges. As described above, the uncoated portion 11200 may have a constant width on an edge of the electrode plate 11000, and more specifically, on the long edge of the electrode plate 1100.

In this embodiment, the pattern region 11300 may be formed so as to connect both ends of the uncoated portion 11200, and more specifically, one point of one short edge of the electrode plate 11000 which belongs to the uncoated portion 11200 and one point of another short edge of the electrode plate 11000 which belong to the uncoated portion 11200.

Therefore, in an embodiment, the uncoated portion 11200 may be divided into two regions by the pattern region 11300, and more specifically, the two regions may be connected through one or more connecting portions 11310 in the pattern region 11300. At least one of the two regions separated by the pattern region 11300 may be in contact with the coating portion 11100.

In this embodiment, when a current greater than or equal to a predetermined reference value passes through the electrode plate 11000, at least a part of the pattern region 11300, and more specifically, one or more connecting portions 11310 included in the pattern region 11300 all break, so that the electrical connection between the two regions separated by the pattern region 11300 may be released.

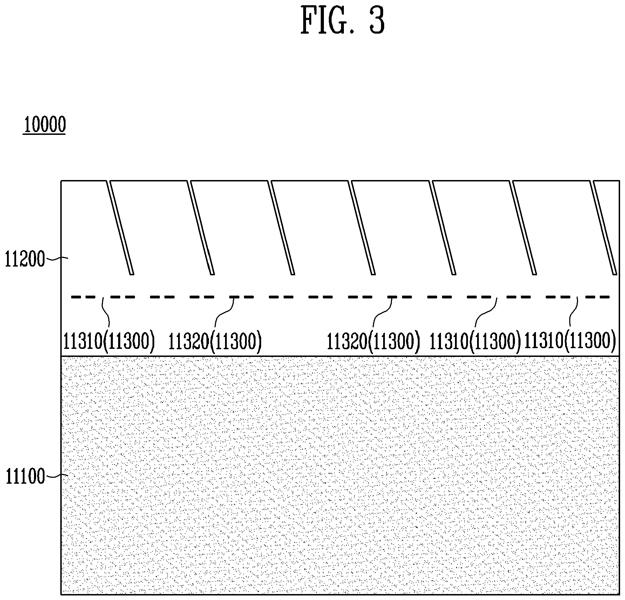

FIG. 3 is a diagram illustrating an example of an electrode for a secondary battery according to another embodiment of the present disclosure.

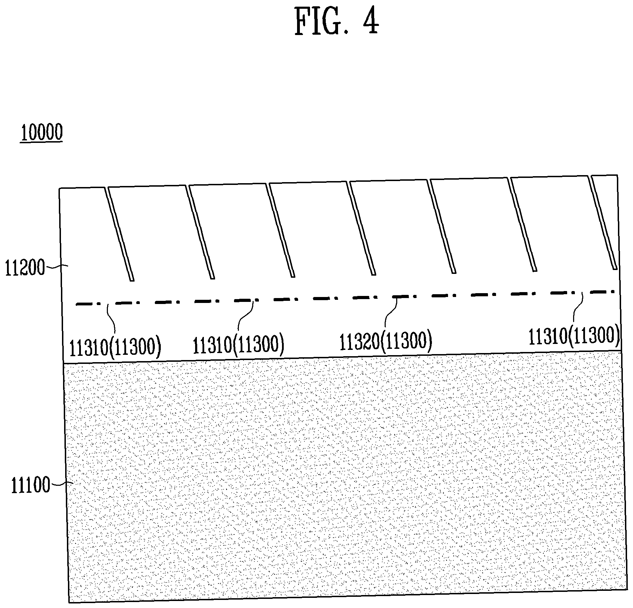

FIG. 4 is a diagram illustrating an example of an electrode for a secondary battery according to another embodiment of the present disclosure.

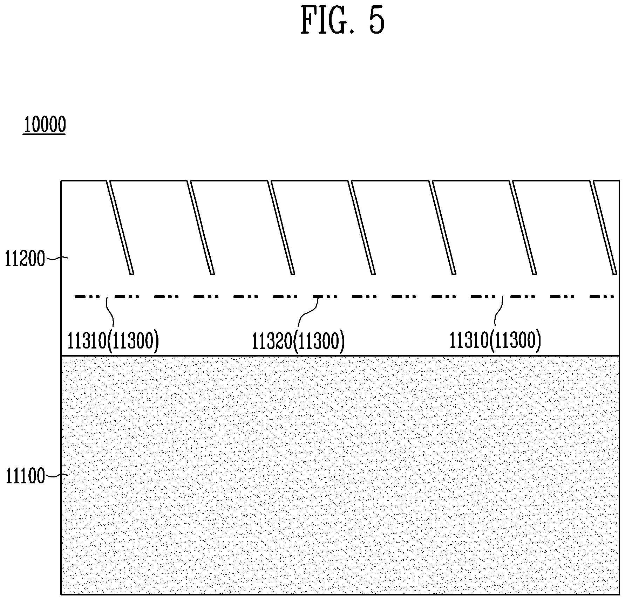

FIG. 5 is a diagram illustrating an example of an electrode for a secondary battery according to another embodiment of the present disclosure.

In an embodiment, the pattern region 11300 further includes one or more cutout portion 11320 penetrating the electrode plate 11000, and the plurality of connecting portions 11310 are included in the pattern region 11300, and any two connecting portions 11310 adjacent to each other among the plurality of connecting portions 11310 may be spaced apart in the first direction DR1 by one of the cutout portion 11320.

Referring to FIGS. 1 to 5 and FIG. 6 to be described below, the pattern region 11300 may further include a cutout portion 11320 in addition to the connecting portion 11310 as described above.

In one embodiment, the cutout portion 11320 may penetrate the electrode plate 11000. That is, in one embodiment, the cutout portion 11320 may be a slit or a hole formed to penetrate the electrode plate 11000.

In order to form the cutout portion 11320 as described above, a laser or the like may be irradiated at a desired length and interval.

In an embodiment, the plurality of connecting portions 11310 may be included in the pattern region 11300. In an embodiment, two connecting portions 11310 adjacent to each other among the plurality of connecting portions 11310 may be spaced apart from each other in the first direction DR1 by one of the cutout portions 11320.

That is, in this embodiment, the pattern region 11300 may include the connecting portions 11310 and the one or more cutout portions 11320 which alternate in the first direction DR1.

The connecting portion 11310 and the cutout portion 11320 may be formed in various manners. For example, as shown in FIG. 1, the plurality of connecting portions 11310 and the one or more cutout portions 11320 may be included in the pattern region 11300 such that each of the connecting portions 11310 and each of the cutout portions 11320 may have the same configuration.

Alternatively, as shown in FIG. 3, the plurality of connecting portions 11310 and the one or more cutout portions 11320 may be included in the pattern region 11300 such that each of the cutout portions 11320 only may have the same configuration.

Alternatively, as shown in FIGS. 4 and 5, the plurality of connecting portions 11310 and the one or more cutout portions 11320 may be included in the pattern region 11300 such that the configuration of each of the plurality of connecting portions 11310 and the configuration of each of the cutout portions 11320 may be different from each other.

Accordingly, the pattern which is formed by the plurality of connecting portions 11310 and the one or more cutout portions 11320 may vary as necessary.

FIG. 6 is an enlarged view of an area A1 of FIG. 1.

Referring to FIG. 6, in an embodiment, the uncoated portion 11200 may include a base portion 11210 formed with a predetermined width wb along a first boundary B1, between the coating portion 11100 and the uncoated portion 11200, and one or more flags 11220 extending from the base portion 11210 in a second direction DR2 away from the first boundary B1.

In an embodiment, the base portion 11210 may mean a region formed by the predetermined width wb along the first boundary B1 in the uncoated portion 11200. In an exemplary embodiment, the base portion 11210 may mean a continuous region formed with the predetermined width wb along the first boundary B1.

In one embodiment, the one or more flags 11220 may refer to an area extending from the base portion 11210 in the second direction DR2 away from the first boundary B1. In a specific embodiment, the flag 11220 may be provided as a plurality of flags 11220 as shown in FIGS. 1 to 6. In this embodiment, two flags 11220 adjacent to each other among the plurality of flags 11220 may be spaced apart from each other by a predetermined separation distance.

In FIGS. 1 to 6, for convenience of description, each flag 11220 is shown as a region having a substantially parallelogram shape, but is not necessarily limited thereto, and if necessary, each of the flags 11220 may be independently formed in a shape including a triangle, a rectangle, a square, a trapezoid, a circle, an ellipse, an oblong, another n-gon (n is a natural number of 5 or more), or may include at least a part thereof.

On the other hand, the second direction DR2 in FIG. 6 is arbitrarily shown for convenience of description, and the above second direction DR2 may be set in any direction as long as it corresponds to a direction away from the above first boundary B1, and is not necessarily limited to the direction shown in FIG. 5.

As described below, in the process of forming the electrode assembly, each of the one or more flags 11220 may be bent in a direction toward a virtual winding axis A of the electrode assembly along a second boundary B2, which is a boundary with the base portion 11210, as a folding line. The one or more bent flags 11220 may be electrically connected to other components in the battery cell, such as current collector plates, etc., to function as a path to release electrical energy produced from the electrode to the outside or to supply electrical energy supplied from the outside to the electrode.

Referring to FIG. 6, in one embodiment, the uncoated portion 11200 may include the base portion 11210 having the predetermined width wb along the first boundary B1 between the coating portion 11100 and the uncoated portion 11200, and one or more flags 11220 extending from the base portion 11210 in the second direction DR2 away from the first boundary B1. At least a portion of the pattern region 11300 may be formed in the base portion 11210.

That is, in this embodiment, at least a portion of the pattern region 11300 may be formed in the base portion 11210. In a specific embodiment, the entire pattern region 11300 may be formed in the base portion 11210.

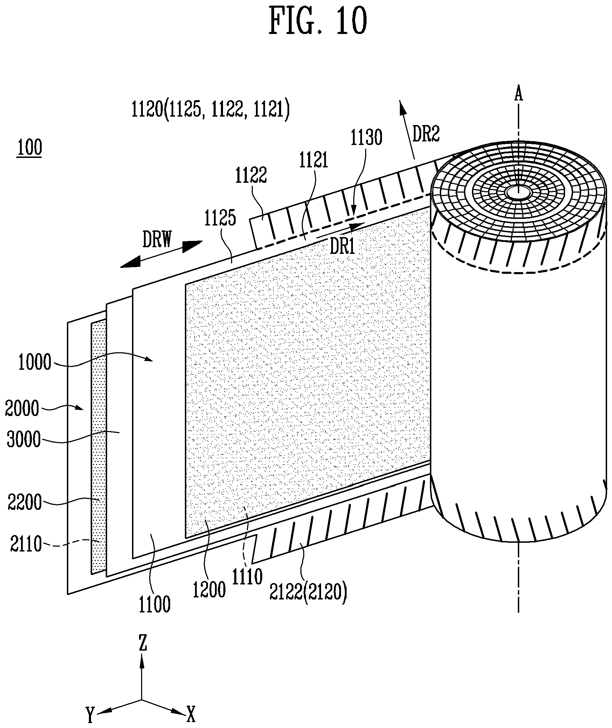

In this embodiment, the pattern region 11300 may connect both ends of the base portion 11210. In an exemplary embodiment, as described above with reference to FIG. 1, the pattern region 11300 may connect both ends in a direction transverse to the base portion 11210 with respect to the extension direction of the uncoated portion 11200 with reference to FIG. 10 to be described below.

Referring to FIG. 6, in an embodiment, the base portion 11210 includes a first region 11230 which is located along the first boundary B1 and is defined to have a width of 50% to 60% of the predetermined width wb, and a second region 11240 which is a region other than the first region 11230. At least a part of the pattern region 11300 may be formed in the second region 11240.

In an embodiment, the base portion 11210 may be divided into the first region 11230 and the second region 11240.

As described above, the base portion 11210 may be formed with the predetermined width wb along the first boundary B1. The first region 11230 may contact by the coating portion 11100 along the first boundary B1 and may be defined to have a width of 50% to 60% of the width of the base portion 11210 along the first boundary B1.

The second region 11240 may mean another region excluding the first region 11230 in the base portion 11210. In this embodiment, the second region 11240 may border the one or more flags 11220 along the second boundary B2 at the base portion 11210, and may border the first region 11230 on the opposite side of the second boundary B2.

In one embodiment, at least a portion of the pattern region 11300 may be formed in the second region 11240. In a specific embodiment, the entire pattern region 11300 may be formed in the second region 11240.

In this embodiment, the pattern region 11300 may connect both ends of the second region 11240. In an exemplary embodiment, as described above with reference to FIG. 1, the pattern region 11300 may connect both ends in a direction transverse to the base portion 11210 with respect to the extension direction of the uncoated portion 11200 with reference to FIG. 10 to be described below.

In an embodiment, the electrode 10000 for the secondary battery may further include an insulating portion (not shown) which covers at least a portion of the electrode 10000 so as to overlap both the coating portion 11100 and the uncoated portion 11200 along the first boundary B1 between the coating portion 11200 and the uncoated portion 11200. This insulating portion (not shown) may be included so as to prevent short circuits due to contact between electrodes in the electrode assembly or prevent breakage during the electrode manufacturing processes. The insulating portion (not shown) may be included, for example, as an insulating tape attached along the first boundary B1, an insulating coating applied along the first boundaryB1, or the like.

In an exemplary embodiment, the insulating portion (not shown) may have the predetermined width wb. When at least a part of the pattern region 11300, and more specifically, the entire pattern region 11300 is included in the second region 11240, physical interference with the insulating portion (not shown) may be eliminated, and deterioration in fusing performance due to the presence of the insulating portion (not shown) may be prevented.

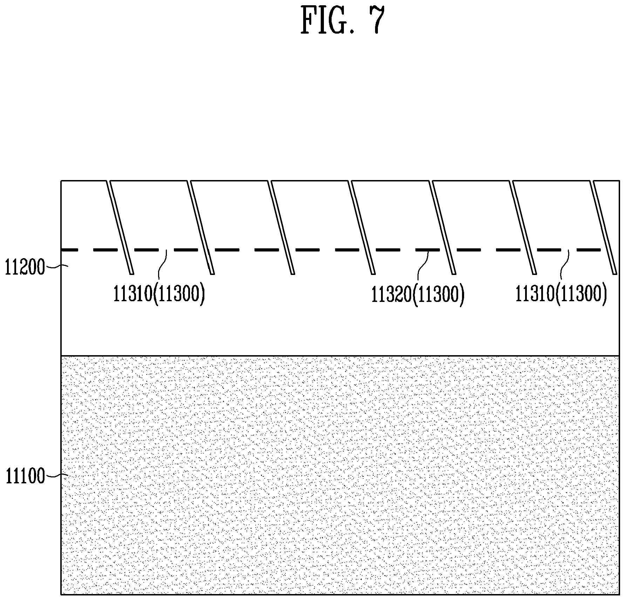

FIG. 7 is a diagram illustrating an example of an electrode for a secondary battery according to another embodiment of the present disclosure.

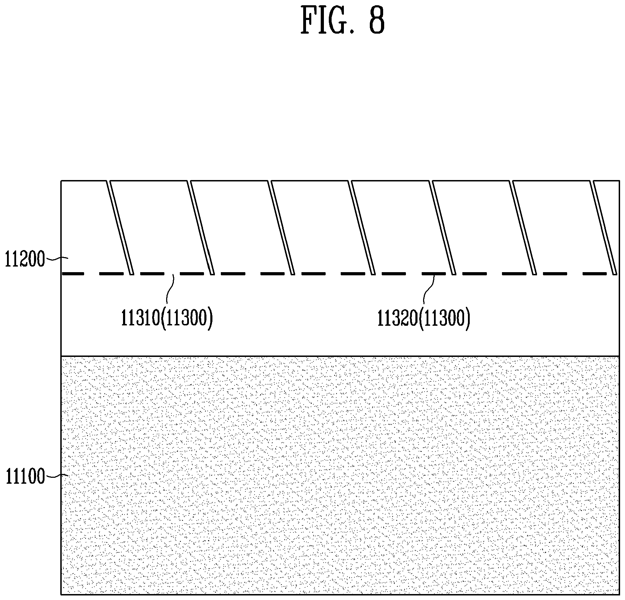

FIG. 8 is a diagram illustrating an example of an electrode for a secondary battery according to another embodiment of the present disclosure.

Unlike the embodiments of the electrode according to the present disclosure as described with reference to FIGS. 1 to 6, FIGS. 7 and 8 show embodiments of an electrode in which the pattern region 11300 is formed at different positions.

Referring also to FIGS. 1 to 7, in one embodiment, the uncoated portion 11200 includes the base portion 11210 having the predetermined width wb along the first boundary B1 between the coating portion 11100 and the uncoated portion 11200, and one or more flags 11220 extending from the base portion 11210 in the second direction DR2 away from the first boundary B1, and at least a portion of the pattern region 11300 may be formed in at least one of the flag 11220.

In a specific embodiment, the entire pattern region 11300 may be located in at least one of the flags 11220, and more specifically, all flags 11220.

In this embodiment, the pattern region 11300 may connect both ends of the one or more flags 11220. In a specific embodiment, when the flag 11220 is provided as a plurality of flags, an outer end of the flag 11220 located on the outermost side in one direction and an outer end of the flag 11220 located at the outermost side in another direction among the plurality of flags 12220 may connect with each other.

Referring to FIGS. 1 to 8, in an embodiment, the uncoated portion 11200 includes the base portion 11210 having the predetermined width wb along the first boundary B1 between the coating portion 11100 and the uncoated portion 11200, and one or more flags 11220 extending from the base portion 11210 in the second direction DR2 away from the first boundary B1. The pattern region 11300 may be formed along the second boundary B2 between the base portion 11210 and the one or more flag 11220. In this embodiment, the second boundary B2 may be included in the pattern region 11300.

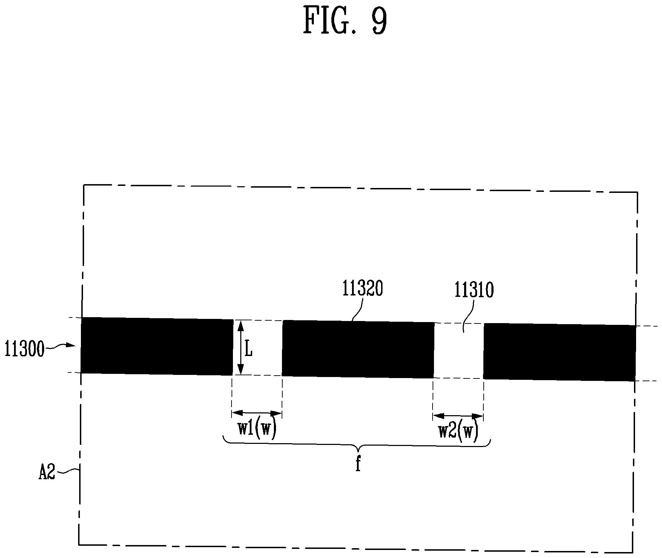

FIG. 9 is an enlarged view of an area A2 of FIG. 6.

Referring to FIG. 9, in an embodiment, each of the plurality of connecting portions 11310 may have a width w defined as a length with respect to the first direction DR1 and a height L defined as a length based on a direction perpendicular to the first direction DR1.

The plurality of connecting portions 11310 may have the same height L.

In one embodiment, each connecting portion 11310 may have the width w and the height L as defined as above.

In an exemplary embodiment, as described above, any two of the plurality of connecting portions 11310 adjacent to each other may be spaced apart from each other in the first direction DR1 by one of the cutout portions 11320. Thus, the width w of each of the connecting portions 11310 may be defined equal to the distance between the cutout portions 11320, and the height L of each of the connecting portions 11310 may also be defined equal to the height of the cutout portion.

In one embodiment, the plurality of connecting portions 11310 may have the same or different widths w.

In one embodiment, the plurality of connecting portions 11310 may have the same height L or at least substantially the same height L.

In an embodiment, thicknesses of the electrode plate 11000 in the plurality of connecting portions 11310 may be the same as, or at least substantially the same as each other.

A value obtained by summing the widths w of the plurality of connecting portions 11310 may be defined as the sum (f) of the widths. The sum (f) of the widths may represent the same value as the width of the current path passing through the connecting portion 11310 in the electrode plate 11000.

In an embodiment, when a current greater than or equal to a predetermined reference current value passes through the uncoated portion 11200, at least one of the plurality of connecting portions 11310 may be disconnected.

In an exemplary embodiment, when at least one of the plurality of connecting portions 11310 breaks due to a current greater than or equal to a predetermined reference current value passing through the uncoated portion 11200, the current path through the disconnected connecting portion 11310 is lost. As a result, the sum (f) of the widths is further reduced, which may mean that the width of the current path passing through the connecting portion 11310 is reduced. The current passing through the remaining other connecting portions 11310 is further increased, so that the other remaining connecting portions 11310 also break in parallel or sequentially due to the passage of the overcurrent, and as a result, all of the connecting portions 11310 included in the pattern region 11300 may be disconnected.

When all of the connecting portions 11310 included in the pattern region 11300 are disconnected in accordance with the above embodiment, the two regions, which may be connected through the pattern region 11300 as described above, may be electrically released from each other. Therefore, when an overcurrent greater than or equal to a predetermined reference current value is supplied to the electrode plate 11000, the connecting portions 11310 included in the pattern region 11300 are disconnected fast to induce an electrical disconnection, thereby preventing the occurrence of fatal safety problems such as a short circuit.

In an embodiment, a value A defined by the following Relational Formula 1 may be from 1.89×10⁷ A/m to 4.25×10⁷ A/m. $A = \frac{L \times I}{c \times f}$

In the above Relational Formula 1, L is the height of each of the plurality of connecting portions 11310, c is the thickness of the electrode plate 11000 in the pattern region 11300, f is the sum of the widths of the entirety of the plurality of connecting portions 11310, and I is the reference current value.

In the above Relational Formula 1, the thickness of the electrode plate 11000 in the pattern region 11300 may mean an average thickness of the electrode plate 11000 corresponding to the region.

In an exemplary embodiment, the value A in [Relational Formula 1] above may further satisfy the relationship defined by [Relational Formula 2-1] below. $A = \frac{V}{{ρ}_{m}}$

In the above [Relational Formula 2-1], V is the operating voltage of the battery, and ρₘ is the specific resistance value based on the melting point of the electrode plate 11000.

In an exemplary embodiment, the value V in the above [Relational Formula 2-1] may be 2 V to 4.5 V. Within the above numerical range, the operating voltage of the battery may be arbitrarily adjusted as necessary.

On the other hand, in the exemplary embodiment, when the electrode plate 11000 includes aluminum, for example, when the electrode plate 11000 is essentially composed of aluminum in the above [Relational Formula 2-1], the value ρₘ may be 1.06×10⁻⁷Ω·m.

Accordingly, when the desired reference current value I is set, the above-described L/c*f value is limited to the above-described numerical range according to the set reference current value. Thus, when an overcurrent corresponding to the reference current value occurs, the connecting portion 11310 reaches a melting point due to resistance caused by the overcurrent passing through the above-described connecting portion 11310 and breaks, and as a result, the connection portion 13110 may be fused.

In an exemplary embodiment, the reference current value I may be appropriately set as necessary.

Although the electrode in the form of the sheet extending in one direction is shown in FIGS. 1 to 9, the present disclosure is not necessarily limited thereto. In addition, depending on the form of the electrode assembly to be described below, the present disclosure may be applied to electrodes of various aspects without departing from the scope of the present disclosure, such as electrodes notched in a desired shape other than the electrodes shown in FIGS. 1 to 9.

### Electrode assembly for secondary battery

FIG. 10 is a diagram illustrating an example before winding is completed in an electrode assembly for a secondary battery according to an embodiment of the present disclosure.

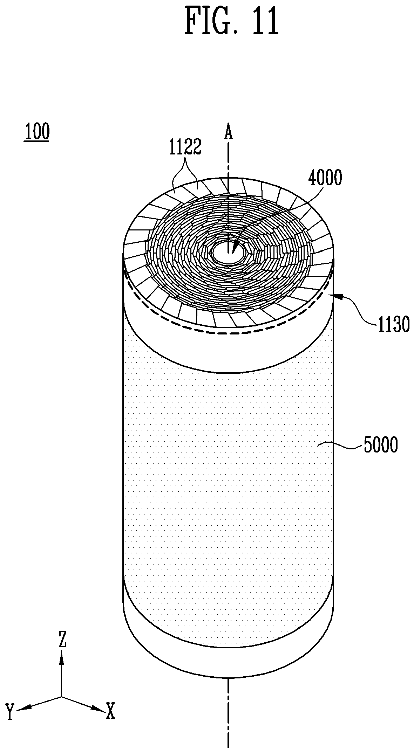

FIG. 11 is a diagram illustrating an example in which winding is completed in an electrode assembly for a secondary battery according to an embodiment of the present disclosure.

Referring to FIGS. 10 and 11, an electrode assembly 100 for a secondary battery according to an embodiment of the present disclosure includes: a first electrode 1000; a second electrode 2000; and a first separator 3000 interposed between the first electrode 1000 and the second electrode 2000. The first electrode 1000, the first separator 3000, and the second electrode 200 are wound around the virtual winding axis A. The first electrode 1000 includes a first electrode plate 1100 including a conductive material and having a shape of a sheet with a predetermined thickness; and a first electrode active material layer 1200 formed on at least one surface of the first electrode plate 1100. The first electrode plate 1000 includes a first coating portion 1110, where the first electrode active material layer 1200 is formed, and a first uncoated portion 1120 formed along at least one edge of the first electrode plate 1100 outside the first coating portion 1110, and the pattern region 11300 including one or more connecting portions 11310 arranged in the first direction DR1, and extending in the first direction DR1 may be formed on at least a part of the first uncoated portion 1120.

Referring to FIG. 10, the example of the electrode shown in FIGS. 1 to 9 may be interpreted as an example showing a partial region of the first electrode 1000 or the second electrode 2000 of FIG. 10.

In an embodiment, the electrode assembly 100 for the secondary battery may include the first electrode 1000; the second electrode 2000; and the first separator 3000 interposed between the first electrode 1000 and the second electrode 2000.

In an embodiment, the electrode assembly 100 for the secondary battery may have a roll shape in which the first electrode 1000, the first separator 3000, and the second electrode 2000 are wound around the virtual winding axis A. As shown in FIG. 10, for example, the virtual winding axis A may parallel to the Z direction.

Referring to FIG. 10, the direction in which the electrode assembly 100 is wound may be defined as a winding direction DRW. The winding direction DRW may, by its nature, have a helical path and may in its context mean both a direction towards the winding axis A (a winding core direction) and an opposite direction (a winding end direction).

In an embodiment, the first electrode plate 1100 may be in the form of a sheet having a predetermined thickness. In an exemplary embodiment, the first electrode plate 1100 may be in the form of a sheet having a rectangular cross-section (a wide surface) having approximately long and short edges. For example, in the first electrode plate 1100 in the form of the sheet, the long edge may mean an edge formed in a direction parallel to the winding direction DRW, for example, as shown in FIG. 10, and the short edge may mean an edge formed in a direction parallel to the Z direction, for example, based on FIG. 10. However, as described above, the first electrode plate 1100 may have a substantially rectangular cross-section macroscopically, and may include various shapes such as a flag shape microscopically.

In addition, the same descriptions of the electrode plate 11000 and the active electrode material layer 12000 with reference to FIGS. 1 to 9 may be applied with respect to the configuration of the first electrode plate 1100 and the configuration of the first active electrode material layer 1200. Thus, overlapping descriptions thereof will be omitted.

Referring to FIG. 10, the first electrode plate 1100 may include the first coating portion 1110 where the first electrode active material layer 1200 is formed, and the first uncoated portion 1120 which is formed on one edge of the first electrode plate 1110 outside the first coating portion 1120.

Referring to FIG. 10, the first uncoated portion 1120 may be formed on one edge of the first electrode plate 1100 outside the first coated portion 1110.

FIG. 10 illustrates an example of an aspect of the first coating portion 1110 and the first uncoated portion 1120. As shown in FIG. 10, for example, the first uncoated portion 1120 may have a constant width along one edge of the first electrode plate 1100, and more specifically, one of the long edges of the first electrode plate 1100. In other words, it may mean that the first electrode active material layer 1200 is not formed on at least one surface of the first electrode plate 1100 in a region having a constant width along one edge (or the long edge) of the first electrode plate 1100.

On the other hand, FIG. 10 illustrates an aspect in which the first uncoated portion 1120 has a constant width along another edge of the first electrode plate 1100, and more specifically, one of the short edges, and more specifically, one of the short edges located at the winding end of the first electrode plate 1100. However, the present disclosure is not necessarily limited thereto, and if necessary, the above-described first uncoated portion 1120 may not be formed in the above-described portion.

In one embodiment, a pattern region 1130 including one or more connecting portions arranged in the first direction DR1 and extending in the first direction DR1 may be formed on at least a portion of the first uncoated portion 1120.

In one embodiment, the first direction DR1 in which the pattern region 1130 extends may be parallel to the winding direction DRW, and in this embodiment, the direction in which the one or more connecting portions are arranged may be parallel to the winding direction DRW. However, the present disclosure is not necessarily limited thereto, and if necessary, the pattern region 1130 may extend in various directions.

In addition, the same descriptions of the pattern region 1300 and the connecting portion 11310 as described above with reference to FIGS. 1 to 9 may be applied with respect to the functional configuration of the pattern region 1130 and the connection portion. Thus, overlapping descriptions thereof are omitted.

In addition, the descriptions of the electrode plate 11000, the coating portion 11100, and the uncoated portion 12100 described above with reference to FIGS. 1 to 9 may be applied with respect to the configurations of the first electrode plate 1100, the first coating portion 1110, and the first uncoated portion 1120. Thus, overlapping descriptions thereof will not be repeated.

In an embodiment, one of the first electrode 1000 and the second electrode 2000 may be a positive electrode, and the other may be a negative electrode. In a specific embodiment, the first electrode 1000 may be a positive electrode, and the second electrode 2000 may be a negative electrode.

In an embodiment, when the first electrode 1000 is a positive electrode, the first electrode 1000 may include a positive electrode plate and a positive electrode active material layer. The above-described descriptions of the positive electrode plates and positive electrode active material layers with reference to FIGS. 1 to 9 may be applied with respect to the configuration of the positive electrode plate and the positive electrode active material layer. Thus, overlapping descriptions thereof will not be repeated.

In this embodiment, the first electrode plate 1100 may include aluminum. In a specific embodiment, the first electrode plate 1100 may be essentially composed of aluminum.

Referring to FIG. 10, in an embodiment, the first uncoated portion 1120 includes a first base portion 1121 having the predetermined width wb (see FIG. 6) along a first boundary between the first coating portion 1110 and the first uncoated portion 1120, and one or more first flags 1122 extending from the first base portion 1121 in the second direction DR2 away from the first boundary, and at least a part of the pattern region 1130 may be formed at the first base portion 1121.

In an embodiment, the first base portion 1121 may refer to an area formed by the first blank portion 1120 having a predetermined width along the first boundary. In an exemplary embodiment, the first base portion 1121 may mean a continuous region having a predetermined width along the first boundary. Specifically, the first base portion 1121 may extend, for example, in the winding direction DRW as illustrated in FIG. 10.

In an embodiment, the one or more first flags 1122 may mean a region extending from the first base portion 1121 in the second direction DR2 away from the first boundary.

In a specific embodiment, a plurality of first flags 1122 may be provided as shown in FIG. 10. In this embodiment, two first flags 1122 adjacent to each other among the plurality of first flags 1122 may be spaced apart from each other by a predetermined separation distance.

Referring to FIG. 11, the one or more first flags 1122 as described above may be bent in a direction toward the winding axis A with a second boundary with the first base portion 1121, along a folding line in the process of forming the electrode assembly 100. On the other hand, as shown in FIG. 11, the one or more first flags 1122 may be bent so that at least parts thereof may overlap each other in the Z direction.

The one or more bent first flags 1122 may be electrically connected to other components in the battery cell, such as current collector plates, to function as a path for discharging electrical energy produced from the electrode to the outside or for supplying electrical energy supplied from the outside to the electrode.

In an embodiment, in the electrode assembly 100 for the secondary battery, the first uncoated portion 1120 may further include a first end portion 1125 formed at one end adjacent to the winding core and the other end adjacent to the winding end with a width equal to or different from the width of the first base portion along the first boundary, based on the winding direction DRW. In this embodiment, the first base portion 1121 and the one or more first flags 1122 may not be formed over the entire first uncoated portion 1120, but may be formed only between the two ends of the first uncoated portion 1120 and the winding core and the winding end.

In addition, the same descriptions of the base portion 11210 and the flag 11220 described above with reference to FIGS. 1 to 9 may be applied with respect to the configurations of the first base portion 1121 and the first flag 1122. Thus, overlapping descriptions thereof are omitted.

In an embodiment, the pattern region 1130 may connect both ends of the first uncoated portion 1120.

Referring to FIG. 10, in an embodiment, the pattern region 1130 may connect both ends of the first uncoated portion 1120. Referring to FIG. 10, in a specific embodiment, the pattern region 1130 may connect both ends of the first base portion 1121. In an exemplary embodiment, the pattern region 1130 may connect both ends of the first base portion 1121 in a direction transverse to the first base portion 1211 with respect to an extending direction (i.e., a direction parallel to the winding direction DRW).

In an embodiment, the first base portion 1121 includes a first region which is located along the first boundary and is defined to have a width of 50% to 60% of the predetermined width, and a second region which is a region other than the first region, and at least a part of the pattern region 1130 may be formed at the second region.

In an embodiment, the first uncoated portion 1120 includes the first base portion 1121 formed with the predetermined width along the first boundary between the first coating portion 1110 and the first uncoated portion 1120, and one or more first flags 1122 extending in the second direction DR2 away from the first boundary from the first base portion 1121. At least a part of the pattern region 1130 may be formed on at least one of the first flags 1122.

In an embodiment, the first uncoated portion 1120 includes the first base portion 1121 having a predetermined width along a first boundary between the first coating portion 1110 and the first uncoated portion 1120, and one or more first flags 1122 extending from the first base portion 1121in the second direction DR2 away from the first boundary. The pattern region 1130 may be formed along a second boundary between the first base portion 1121 and the one or more first flags 1122. In this embodiment, the second boundary may be included in the pattern region 1130.

The same descriptions of the first base portion 1121 and the first flag 1122 above with reference to FIGS. 1 to 9 may be applied with respect to the base portion 11210 and the flag 11220.

In an embodiment, the pattern region 1130 may further include one or more cutout portion passing through the first electrode plate 1100, and the plurality of connecting portions may be included in the pattern region 1130, and any two of the connecting portions adjacent to each other may be separated from each other in the first direction DR1 by one of the cutout portions.

In an embodiment, each of the plurality of connecting portions may have a width defined by a length with reference to the first direction DR1 and a height defined by a length based on a direction perpendicular to the first direction DR1.

In an embodiment, each of the plurality of connecting portions has a width defined by a length with reference to the first direction DR1 and a height defined by a length based on a direction perpendicular to the first direction DR1. The plurality of connecting portions may have the same height.

As shown in FIG. 10, for example, the first direction DR1 may be the same or at least substantially the same as the winding direction DRW as described above. Accordingly, the width may be defined as a length based on a direction which is substantially the same as the winding direction DRW. The height may be defined as the length based on the direction substantially perpendicular to the winding direction DW, and in an exemplary embodiment, based on the Z direction as shown in FIG. 10.

In an embodiment, when a current greater than or equal to a predetermined reference current value passes through the first blank portion 1120, at least one of the plurality of connecting portions may be disconnected.

In an embodiment, the value A defined by the following Relational Formula 1 may be from 1.89×10⁷ A/m to 4.25×10⁷ A/m. $A = \frac{L \times I}{c \times f}$

In the above Relational Formula 1, L is the height of each of the plurality of connecting portions, c is the thickness of the first electrode plate 1100 in the pattern region 1130, f is the sum of the widths of the plurality of connecting portions, and I is the reference current value.

In addition, the above-described descriptions of the pattern region 11300, the connecting portion 11310, the cutout portion 11320, the reference current value, and the like with reference to FIGS. 1 to 9 may be directly applied with respect to the configurations of the pattern regions 1130, the connecting portions, the cutout portions, and the reference current value. Thus, overlapping descriptions are omitted.

In an embodiment, the second electrode 2000 may include a second electrode plate 2100 and a second electrode active material layer 2200. The second electrode plate 2100 may include a second coating portion 2110 where the second electrode active material layer 2200 is formed, and a second uncoated portion 2120 which is formed on an edge of the second electrode plate 2200 outside the second coating portion 2110.

When the second electrode 2000 is a negative electrode, the second electrode 2000 may include a negative electrode plate and a negative electrode active material layer. The same descriptions of the negative electrode plate and the negative electrode active material layer with reference to FIGS. 1 to 9 may be applied with respect to the configurations of the negative electrode plate and the negative electrode active material layer. Thus, overlapping descriptions thereof will not be repeated.

In an embodiment, the second uncoated portion 2120 may include a second base portion 2121 and one or more second flags 2122 to which the same description of the first electrode 1000 may be applied. The one or more second flags 2122 may extend in a direction different from the second direction DR2 as shown in FIG. 10.

In an embodiment, the pattern region 1130 may not be formed on the second electrode 2000. In this embodiment, as a result, the pattern region 1130 may be formed only on the first electrode 1000 and not on the second electrode 2000.

However, the present disclosure is not necessarily limited thereto. When the melting point and/or electrical resistance of the second electrode plate 2100 of the second electrode 2000 is higher than that of the first electrode plate 1100 of the first electrode 1000, contrary to the above description, the pattern region 1130 may be formed in the second electrode 2000 and not in the first electrode 1000.

Referring to FIG. 10, in an embodiment, the electrode assembly 100 may include a separator. The separator may include the first separator 3000 interposed between the first electrode 1000 and the second electrode 2000.

In one embodiment, the separator may be in the form of a sheet with a predetermined thickness. In an exemplary embodiment, the separator may have a long edge and a short edge, and a length of the long edge of the separator may be the same as that of the first electrode 1000 or the second electrode 2000, or may be greater than that of the long edge of one of the first electrode 1000 or the second electrode 2000 to more reliably prevent an electrical short circuit between the first electrode 1000 and the second electrode 2000.

In an embodiment, the separator may include a material which prevents an electrical short-circuit between the positive electrode and the negative electrode and generates a flow of ions. According to an embodiment, the thickness of the separator may be 10 µm to 20 µm, but the present disclosure is not limited thereto.

In one embodiment, the separator may include a porous polymer or a porous nonwoven fabric. Examples of the porous polymer may include polyolefin-based polymers such as ethylene polymers, propylene polymers, ethylene/butene copolymers, ethylene-hexene copolymers, and ethylene-methacrylate copolymers. Examples of the porous nonwoven fabric may include high melting glass fibers, polyethylene terephthalate fibers, and the like. The separator may also include a ceramic-based material. For example, inorganic particles may be coated on or dispersed within the polymer to improve heat resistance.

The separator may have a single-layer or multi-layer structure including the polymer and/or the nonwoven as fabric described above.

In another embodiment, when the secondary battery is an all-solid battery or a semisolid battery, the separator may include a solid electrolyte. Examples of the solid electrolyte may include an oxide-based solid electrolyte, a sulfide-based solid electrolyte and a polymer-based solid electrolyte. In this embodiment, the solid electrolyte may include only a solid electrolyte, or may be laminated or coated on a substrate or the like.

In an embodiment, the first separator 3000 may be interposed between the first electrode 1000 and the second electrode 2000.

In this embodiment, the electrode assembly 100 may be in the form of a roll in which the first electrode 1000, the first separator 3000, and the second electrode 2000 are sequentially stacked and wound around the winding axis A.

In an embodiment, the electrode assembly 100 may further include a second separator (not shown).

In an embodiment, the second separator (not shown) may be configured to additionally cover the first electrode 1000 and/or the second electrode 2000 on a surface other than the surface in contact with the first separator 3000 in the electrode assembly 100 including the first electrode 1000, the first separator 3000, and the second electrode 2000.

That is, in this embodiment, the electrode assembly 100 may be in the form of a roll in which the first electrode 1000, the first separator 3000, the second electrode 2000, and the second separator (not shown) are stacked sequentially and wound around the winding axis A, or in which the first separator 1000, the first separator 3000, and the second electrode 2000 are stacked sequentially and wound around the wound axis A.

Referring to FIG. 11, in an embodiment, the electrode assembly 100 may further include an insulating cover 5000 which covers at least a portion of an outer circumferential surface of the electrode assembly 100 wound in the form of the roll.

According to an exemplary embodiment, the insulating cover 5000 may have electrical insulation and may also have ductility. The insulating cover 5000 covers at least a part of the outer circumferential surface of the electrode assembly 100, so as to block electrical contact between the electrode assembly 100 and other components constituting a battery cell, such as an exterior material of the battery cell, which is described below, so as to prevent the occurrence of a short circuit, or prevent damage to the electrode assembly 100 when the electrode assembly 100 is accommodated in the exterior material of the battery cell to be described below.

According to an exemplary embodiment, the insulating cover 5000 may include a polyolefin-based polymer, nylon, polyimide, silicon, or the like as a material.

In an embodiment, the electrode assembly 100 may include a center hole 4000 in an area adjacent to the winding core. Since the degree of bending (e.g., a radius of curvature, etc.) of the electrode assembly 100 increases towards the winding axis A, the center hole 4000 may be provided to prevent damage to the electrode assembly 100.

In an embodiment, the center hole 4000 may be a passage through which an electrolyte solution to be described below is injected or the electrolyte solution moves. In this embodiment, the electrolyte solution may be injected through the center hole 4000 and moved to spread inside the exterior material to immerse the electrode assembly 100.

In an embodiment, the electrode assembly 100 may further include a center pin inserted into the center hole 4000.

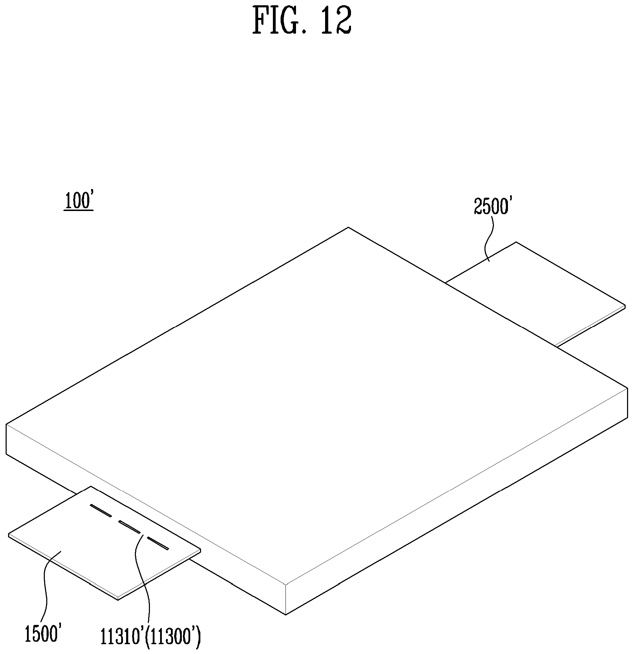

FIG. 12 is a diagram illustrating an example of the electrode assembly 100 for the secondary battery according to another embodiment of the present disclosure.

The electrode assembly in the form of a roll wound in a cylindrical shape is shown in FIGS. 10 and 11. However, the present disclosure is not necessarily limited thereto. The present disclosure may be applied to electrode assemblies in various aspects without departing from the scope of without departing from the scope of without departing from the scope of the present disclosure, such as an electrode assembly in the form of a jelly roll having various shapes, and an electrode assembly in various shapes such as stacking, laminating, and folding.

FIG. 12 shows an electrode assembly 100' in a stacked form as in the above example.

In an embodiment, in the electrode assembly 100', a separator (not shown) is interposed between a first electrode (not shown) and a second electrode (not shown). A plurality of first electrodes (not shown), a plurality of separators (not shown), and a plurality of second electrodes (not shown) are stacked in this manner.

In an embodiment, as described above with reference to FIGS. 1 to 11, the electrode assembly 100' may include a first electrode plate (not shown) and a first electrode active material layer (not shown), the first electrode plate (not shown) may include a first coating portion (not shown) or a first uncoated portion (not shown), and a pattern region (not shown) including one or more connecting portions (not shown) arranged in a first direction, and extending in the first direction may be formed on at least a part of the first uncoated portion (not shown).

Referring to FIG. 12, in an embodiment, the electrode assembly 100' may include a first lead portion 1500' connected to at least one of first uncoated portions (not shown) of each of a plurality of stacked first electrodes (not shown) and a second lead portion 2500' connected to at least one of second uncoated portions of each of the plurality of stacked second electrodes (not shown).

In one embodiment, a pattern region 11300' including one or more connecting portions 11310' arranged in the first direction DR1 and extending in the first direction DR1 may be formed on at least a portion of the first lead portion 1500'.

Since the above descriptions with reference to FIGS. 1 and 11 are equally applied to the other configurations of the pattern region 11300', redundant descriptions thereof are omitted.

### Secondary battery

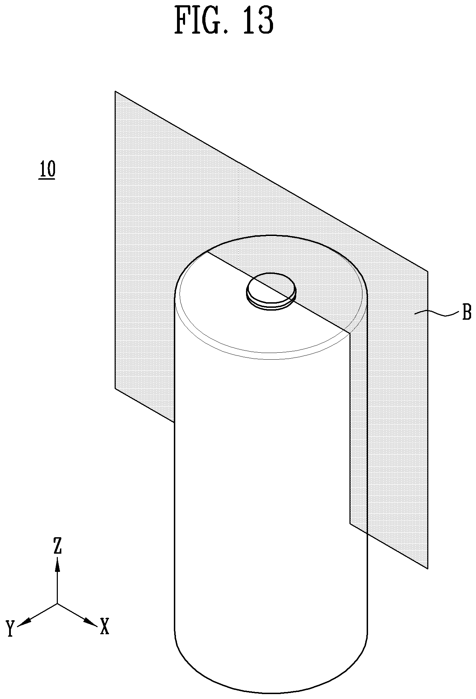

FIG. 13 is a diagram illustrating an example of a battery cell constituting a secondary battery according to an embodiment of the present disclosure.

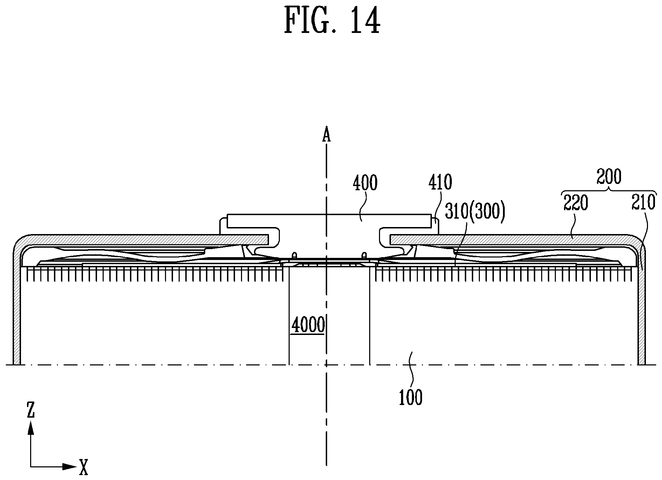

FIG. **14** is a diagram illustrating an example of a cross section in the area B of the battery cell of FIG. 13.

A secondary battery according to an embodiment of the present disclosure may include the electrode assembly 100 for the secondary battery according to one embodiment of the present disclosure.

In an embodiment, the secondary battery may include a battery cell as one of unit components thereof. The battery cell may include the electrode for the secondary battery according to an embodiment of the present disclosure as described above with reference to FIGS. 1 to 9 or the electrode assembly for a secondary battery in accordance with the embodiment of the disclosure described above with reference to FIGS. 10 and 11.

FIG. 13 illustrates a battery cell 10 according to an embodiment of the present disclosure, and FIG. 14 schematically illustrates a cross-section in one region of the battery cell 10.

FIGS. 13 and 14 show a cylindrical can-type battery cell. However, this is only for convenience of description. The present disclosure is not necessarily limited thereto, and may be applied to various types of battery cells such as prismatic battery cells and pouch type battery cells as necessary without departing from the scope of the present disclosure.

Referring to FIGS. 13 and 14, in an embodiment, the battery cell 10 may include an exterior material 200 having an accommodation space therein; the electrode assembly 100 for the secondary battery according to an embodiment of the present disclosure accommodated in the accommodation space; and a current collector plate 300 accommodated in the accommodation space and electrically connected to the electrode assembly 100 for the secondary battery.

In an embodiment, the electrode assembly 100 includes a first electrode, a second electrode, and a first separator interposed between the first electrode and the second electrode, and the first electrode, the first separator, and the second electrode are wound around the virtual winding axis A. The first electrode includes a first electrode plate including a conductive material and having a shape of a sheet with a predetermined thickness, and a first electrode active material layer formed on at least one surface of the first electrode plate. The first electrode plate includes a first coating portion where the first electrode active material layer is formed, and a first uncoated portion formed outside the first coating portion on an edge of the first electrode plates. A pattern region including one or more connecting portions arranged in a predetermined direction (the first direction described with reference to FIGS. 1 to 11), and extending in the direction may be formed on at least a part of the first uncoated portion.

In addition, since the above-described description with reference to FIGS. 1 to 11 are equally applied to the configuration of the electrode assembly 100, overlapping descriptions thereof will be omitted below.

In an embodiment, the exterior material 200 may include a cylindrical sidewall portion 210 having an accommodation space therein, a closed end portion 220 formed at one end of the sidewall portion, and an opening provided at the other end of the sidewall portion.

Referring to the configurations shown in FIGS. 13 and 14, in an exemplary embodiment, the sidewall portion 210 may have a cylindrical shape. In a specific embodiment thereof, the sidewall portion 210 may have a cylindrical shape with an accommodation space therein. The sidewall portion 210 may accommodate the electrode assembly 100 and the current collector plate 300 in the internal accommodation space.

In an embodiment, the closed end portion 220 may be formed at one end of the sidewall portion 210. In a specific embodiment, the closed end portion 220 may be formed at one end of the sidewall portion 210 in a direction perpendicular to the extending direction of the sidewall portion 210 to seal one end of the sidewall portion 210. The one end may mean one of both ends of the sidewall portion 210 having the cylindrical shape on the basis of the extension direction of the sidewall portion 210.

In an embodiment, the closed end portion 220 may extend from one end of the sidewall portion 210. That is, the closed end portion 220 may be formed integrally with the sidewall portion 210.

However, in an embodiment, the closed end portion 220 may be formed at one end of the sidewall portion 210, but may be formed separately from the sidewall portion 310. In this embodiment, the closed end portion 220 may have a structure which is separable from the sidewall portion 210.

In an embodiment, the closed end portion 220 may define a cap assembly together with an electrode terminal 400 and a gasket 410 to be described below.

In one embodiment, the opening may be provided at the other end of the sidewall portion 210. Here, the other end of the sidewall portion 210 having the cylindrical shape may mean one end other than the one end of both ends on the basis of the extension direction of the sidewall portion 210.

In one embodiment, the opening may be in communication with the accommodation space. Therefore, the electrode assembly 100 and the current collector plate 300 may be accommodated into the exterior material 200 through the opening. In one embodiment, the opening may be covered by a cap plate (not shown) to be described below and sealed. When the opening is covered by the cap plate (not shown), the receiving pace may be sealed from the outside by the sidewall portion 210, the closed end portion 220, and the cap plate (not shown).

In an embodiment, the opening is a space communicating with the accommodation space, and may mean a planar space which has a circular, elliptical, or oblong shape contacting the one end, or includes at least a part thereof.

In one embodiment, the cap plate (not shown) may cover the opening. As described above, the opening may be sealed by being covered by the cap plate (not shown).

In an embodiment, the cap plate (not shown) may further include a configuration such as a liquid injection portion for injecting an electrolyte solution or a notching portion for venting a gas, if necessary.

In one embodiment, the cap plate (not shown) may be welded to the exterior material 200. In an exemplary embodiment, the welding is not particularly limited as long as a welding method is used for bonding between metal materials.

In one embodiment, the cap plate (not shown) may be engaged with the exterior material 200 by beading. In an exemplary embodiment, after at least a portion of the region including the other end adjacent to the opening in the sidewall portion 210 is beaded along the circumference of the sidewall portion 220, the cap plate (not shown) is then placed on the beaded region so that the cap plate (not shown) covers the opening, and the region including the other end in the sidewall portion 210 is crimped. However, the present disclosure is not necessarily limited thereto.

In one embodiment, the exterior material 200 and the cap plate (not shown) may include the same material. Alternatively, the exterior material 200 and the cap plate (not shown) may include different materials.

Referring to FIGS. 13 and 14, in one embodiment, the battery cell 10 may include the electrode terminal 400 penetrating the closed end portion 220.

As described above, the closed end portion 220 may define a cap assembly together with the electrode terminal 400 and the gasket 410.

According to an exemplary embodiment, the electrode terminal 400 has a cross-sectional shape of approximately "H" and penetrates the closed end portion 220, and one end portion may be located in the accommodation space and the other end portion may protrude in the extending direction of the exterior material 200 outside the accommodation space.

According to an exemplary embodiment, the electrode terminal 400 may be electrically connected to one of the electrodes (the positive electrode and the negative electrode) in the accommodation space. According to an exemplary embodiment, the electrode terminal 400 may be directly connected to at least one of the electrode current collector plates (the positive electrode current collector plate and the negative electrode current collector plate), or may be connected through a separate connecting member. The electrode may be a positive electrode, but is not necessarily limited thereto.

According to an exemplary embodiment, the electrode terminal 400 may function as an external terminal through the above configuration.

According to an exemplary embodiment, the gasket 410 may prevent electrical contact between the electrode terminal 400 and the closed end portion 220 of the exterior material 200.

Alternatively, the battery cell 10 according to an embodiment of the present disclosure may have a configuration in which the opening is covered by a separate cap assembly. The battery cell 10 may not separately include a cap plate (not shown), and the electrode terminal 400 may be located in the opening.

Referring to FIG. 14, in an embodiment, the current collector plate 300 includes a conductive material and may be formed in the form of a plate having a predetermined thickness. In an exemplary embodiment, the current collector plate 300 in the form of a plate may have a shape of a plate which includes a circular cross-section, an elliptical cross-section, or an oblong cross-section, or a shape of a plate including at least a portion thereof.

In an embodiment, the current collector plate 300 may include one of stainless steel, nickel (Ni), aluminum (Al), titanium (Ti), copper (Cu), and alloys thereof, and may be provided in various forms such as a film, a sheet, and foil.

In an embodiment, the current collector plate 300 may be electrically connected to the electrode assembly 100 according to an embodiment of the present disclosure.

In an embodiment, the collector plate 300 may include a first collector plate 310 and a second collector plate (not shown). In an exemplary embodiment, the first collector plate 310 may be electrically connected to the first electrode of the electrode assembly 100, and the second collector plate (not shown) may be electrically connected to the second electrode of the electrode assemblage 100.

As described above, in an embodiment, the electrode assembly 100 may include a pattern region including a plurality of connecting portions arranged in a predetermined direction and extending in the predetermined direction on at least a part of the first uncoated portion of the first electrode.

As described above with reference to FIGS. 10 and 11, in an embodiment, the first uncoated portion may include a first base portion and one or more first flags, and the one or more first flags may be bent in a direction toward the winding axis A, and more specifically, the one or more of the first flags may be bent so as to at least partially overlap with each other in the Z direction.

As shown in FIG. 14, the first electrode and the first current collector plate 310 may be electrically connected by coupling the first current collector plate 310 in the Z direction to the one or more first flags bent in the direction toward the winding axis A so that at least a part thereof may overlap in the Z direction. The above coupling may mean, for example, but is not limited to, welding.

In an embodiment, the first current collector plate 310 may be electrically connected, specifically coupled, to the electrode terminal 400 on another surface with respect to the surface coupled to the first electrode.

Therefore, in an embodiment, the electrical energy generated from the first electrode 1000 may be released to the outside through the electrode terminal 400 by means of the first collector plate 310, or the electrical energy supplied from the outside may enter the battery cell 10 through the electrode terminal 300 and be supplied to the first electrode 1000 through the first collector plates 310.

In the above embodiment, when an unexpected overvoltage or overcurrent occurs in the process of discharging or supplying electrical energy, an electrical disconnection may occur in the pattern region 11300 as in the above-described embodiment of the present disclosure. Therefore, when the overvoltage and overcurrent occurs, the electrical connection of the electrode is quickly released, thereby preventing the occurrence of additional events.

On the other hand, as described above, the pattern region may be formed on the second electrode or on both the first electrode and the second electrode, depending on the melting point or the electrical resistance of the electrode plate. Thus, the above disclosure may be appropriately utilized and applied in the above embodiments.

Configurations other than those disclosed above may be applied without limitation to components which may be commonly used in the field of secondary batteries.

In one embodiment, when the battery cell 10 is a cylindrical can-type battery cell as shown in FIGS. 13 and 14, the form factor thereof may be a cylindrical battery such as 18650, 21700, 26650, 32700, 32140, 46110, 4680, 4695, 48110, 4875, or 4880. In specific embodiments, the form factor may be 46110, 4680, 4695, 48110, 4875, 4880, or the like. In a more specific embodiment, the form factor of the battery cell 10 may be, but is not necessarily limited to, 4680 with a diameter of approximately 46 mm and a height of approximately 80 mm.

The battery cell 10 according to an embodiment of the present disclosure may be used not only as a battery cell used as a power source of a small device, but also preferably as a unit cell of a battery module and/or a battery pack of a medium or large device including a plurality of battery cells. Examples of the small device may include a mobile phone, a notebook computer, a camera, and the like, and examples of the medium or large device may include an electric vehicle, a hybrid electric vehicle, a plug-in hybrid electric vehicle, and a power storage system, but are not limited thereto.

According to an aspect of the present disclosure, it is possible to provide an electrode for a secondary battery and an electrode assembly for the secondary battery that may prevent occurrence of additional accident events by quickly and efficiently inducing fusing of the electrode when an overvoltage or an overcurrent occurs.

According to another aspect of the present disclosure, a secondary battery with improved safety and stability may be provided.

It is understood by those skilled in the art that the plurality of exemplary embodiments described above are specific examples of the following aspects.

Aspect 1: An electrode for a secondary battery, comprising: an electrode plate including a conductive material and having a shape of a sheet with a predetermined thickness; and an electrode active material layer formed on at least one surface of the electrode plate, wherein the electrode plate comprises a coating portion where the electrode active material layer is formed, and an uncoated portion formed on at least one edge of the electrode plate outside the coating portion, and wherein a pattern region including one or more connecting portions arranged in a first direction and extending in the first direction is formed on at least a portion of the uncoated portion.

Aspect 2: The electrode for the secondary battery according to Aspect 1, wherein the electrode plate comprises aluminum.

Aspect 3: The electrode for the secondary battery according to Aspects 1 or 2, wherein the pattern region further comprises one or more cutout portions penetrating the electrode plate, wherein the one or more connecting portions comprise a plurality of connecting portions included in the pattern region, and wherein two adjacent connection portions among the plurality of connecting portions are spaced apart from each other in the first direction by one of the one or more cutout portions.

Aspect 4: The electrode for the secondary battery according to any one of Aspects 1 to 3, wherein the uncoated portion comprises a base portion having a predetermined width along a first boundary between the coating portion and the uncoated portion, and one or more flags extending from the base portion in a second direction away from the first boundary, and (a) wherein at least a portion of the pattern region is formed at the base portion, and/or (b) wherein at least a portion of the pattern region is formed on at least one of the one or more flags, and/or wherein the pattern region is formed along a second boundary between the base portion and the one or more flags.

Aspect 5: The electrode for the secondary battery according to any one of Aspects 1 to 4, wherein the base portion comprises a first region located along the first boundary and defined to have a width of 50% to 60% of the predetermined width, and a second region except the first region, and wherein at least a portion of the pattern region is formed at the second region.

Aspect 6: The electrode for the secondary battery according to any one of Aspects 1 to 5, wherein each of the plurality of connecting portions has a width defined by a length based on the first direction and a height defined by a length based on a direction perpendicular to the first direction.

Aspect 7: The electrode for the secondary battery according to any one of Aspects 1 to 6, wherein when a current greater than or equal to a predetermined reference current value passes through the uncoated portion, at least one of the plurality of connecting portions is disconnected.

Aspect 8: The electrode for the secondary battery according to any one of Aspects 1 to 7, wherein a value A defined by Relational Formula 1 is from 1.89×10⁷ A/m to 4.25×10⁷ A/m:

$A = \frac{L \times I}{c \times f}$
where L is a height of each of the plurality of connecting portions, c is a thickness of the electrode plate in the pattern region, f is a sum of widths of all of the plurality of connecting portions, and I is a reference current value.

Aspect 9: An electrode assembly for a secondary battery, comprising: a first electrode; a second electrode; and a first separator interposed between the first electrode and the second electrode, wherein the first electrode, the first separator, and the second electrode are wound around a virtual winding axis, wherein the first electrode comprises a first electrode plate including a conductive material, preferably comprises aluminum, and having a shape of a sheet with a predetermined thickness, and a first electrode active material layer formed on at least one surface of the first electrode plate, wherein the first electrode plate comprises a first coating portion where the first electrode active material layer is formed, and a first uncoated portion formed on at least one edge of the first electrode plate outside the first coating portion, and wherein a pattern region including one or more connecting portions arranged along a first direction and extending in the first direction is formed on at least a portion of the first uncoated portion.

Aspect 10: The electrode assembly for the secondary battery according to Aspect 9, wherein the first uncoated portion comprises a first base portion having a predetermined width along a first boundary between the first coating portion and the first uncoated portion, and one or more first flags extending from the first base portion in a second direction away from the first boundary, and (a) wherein at least a portion of the pattern region is formed at the first base portion, and/or (b) wherein at least a portion of the pattern region is formed on at least one of the one or more first flags, and/or (c) wherein the pattern region is formed along a second boundary between the first base portion and the one or more first flags.

Aspect 11: The electrode assembly for the secondary battery according to Aspects 9 or 10, wherein the pattern region further comprises at least one cutout portion penetrating the first electrode plate, wherein the one or more connecting portions comprise a plurality of connecting portions included in the pattern region, and wherein two adjacent connecting portions among the plurality of connecting portions are spaced apart from each other in the first direction by one of the one or more cutout portions.

Aspect 12: The electrode assembly for the secondary battery according to any one of Aspects 9 to 11, wherein each of the plurality of connecting portions has a width defined by a length based on the first direction and a height defined by a length based on a direction perpendicular to the first direction.

Aspect 13: The electrode assembly for the secondary battery according to any one of Aspects 9 to 12, wherein when a current greater than or equal to a predetermined reference current value passes through the first uncoated portion, at least one of the plurality of connecting portions is disconnected.

Aspect 14: The electrode assembly for the secondary battery according to any one of Aspects 9 to 13, wherein a value A defined by Relational Formula 1 is from 1.89×10⁷ A/m to 4.25×10⁷ A/m:

$A = \frac{L \times I}{c \times f}$
where L is a height of each of the plurality of connecting portions, c is a thickness of the first electrode plate in the pattern region, f is a sum of widths of the plurality of connecting portions, and I is a reference current value.

Aspect 15: A secondary battery comprising the electrode assembly for the secondary battery according to any one of Aspects 9 to 14.

The present disclosure can be widely applied in the fields of electric vehicles, battery charging stations, and other green technologies such as photovoltaics and wind power using batteries. In addition, the present disclosure may be used in eco-friendly mobility, including electric vehicles and hybrid vehicles, to prevent climate change by suppressing air pollution and greenhouse fluid emissions.

The present disclosure may be modified and implemented in various forms, and its scope is not limited to the above-described embodiments. The content described above is merely an example of applying the principles of the present disclosure, and other features may be further included without departing from the scope of embodiments according to the present disclosure.

## Claims

1. An electrode for a secondary battery, comprising:
an electrode plate including a conductive material and having a shape of a sheet with a predetermined thickness; and
an electrode active material layer formed on at least one surface of the electrode plate,
wherein the electrode plate comprises a coating portion where the electrode active material layer is formed, and an uncoated portion formed on at least one edge of the electrode plate outside the coating portion, and
wherein a pattern region including one or more connecting portions arranged in a first direction and extending in the first direction is formed on at least a portion of the uncoated portion.

2. The electrode for the secondary battery according to claim 1, wherein the electrode plate comprises aluminum.

3. The electrode for the secondary battery according to claims 1 or 2, wherein the pattern region further comprises one or more cutout portions penetrating the electrode plate,
wherein the one or more connecting portions comprise a plurality of connecting portions included in the pattern region, and
wherein two adjacent connection portions among the plurality of connecting portions are spaced apart from each other in the first direction by one of the one or more cutout portions.

4. The electrode for the secondary battery according to any one of claims 1 to 3, wherein the uncoated portion comprises a base portion having a predetermined width along a first boundary between the coating portion and the uncoated portion, and one or more flags extending from the base portion in a second direction away from the first boundary, and
(a) wherein at least a portion of the pattern region is formed at the base portion, and/or
(b) wherein at least a portion of the pattern region is formed on at least one of the one or more flags, and/or
(c) wherein the pattern region is formed along a second boundary between the base portion and the one or more flags.

5. The electrode for the secondary battery according to any one of claims 1 to **4,** wherein the base portion comprises a first region located along the first boundary and defined to have a width of 50% to 60% of the predetermined width, and a second region except the first region, and
wherein at least a portion of the pattern region is formed at the second region.

6. The electrode for the secondary battery according to any one of claims 1 to 5, wherein each of the plurality of connecting portions has a width defined by a length based on the first direction and a height defined by a length based on a direction perpendicular to the first direction.

7. The electrode for the secondary battery according to any one of claims 1 to 6, wherein when a current greater than or equal to a predetermined reference current value passes through the uncoated portion, at least one of the plurality of connecting portions is disconnected.

8. The electrode for the secondary battery according to any one of claims 1 to 7, wherein a value A defined by Relational Formula 1 is from 1.89×10⁷ A/m to 4.25×10⁷A/m $A = \frac{L \times I}{c \times f} ,$ where L is a height of each of the plurality of connecting portions, c is a thickness of the electrode plate in the pattern region, f is a sum of widths of all of the plurality of connecting portions, and I is a reference current value.

9. An electrode assembly for a secondary battery, comprising:
a first electrode;
a second electrode; and
a first separator interposed between the first electrode and the second electrode,
wherein the first electrode, the first separator, and the second electrode are wound around a virtual winding axis,
wherein the first electrode comprises a first electrode plate including a conductive material, preferably comprises aluminum, and having a shape of a sheet with a predetermined thickness, and a first electrode active material layer formed on at least one surface of the first electrode plate,
wherein the first electrode plate comprises a first coating portion where the first electrode active material layer is formed, and a first uncoated portion formed on at least one edge of the first electrode plate outside the first coating portion, and
wherein a pattern region including one or more connecting portions arranged along a first direction and extending in the first direction is formed on at least a portion of the first uncoated portion.

10. The electrode assembly for the secondary battery according to claim 9, wherein the first uncoated portion comprises a first base portion having a predetermined width along a first boundary between the first coating portion and the first uncoated portion, and one or more first flags extending from the first base portion in a second direction away from the first boundary, and
(a) wherein at least a portion of the pattern region is formed at the first base portion, and/or
(b) wherein at least a portion of the pattern region is formed on at least one of the one or more first flags, and/or
(c) wherein the pattern region is formed along a second boundary between the first base portion and the one or more first flags.

11. The electrode assembly for the secondary battery according to claims 9 or 10, wherein the pattern region further comprises at least one cutout portion penetrating the first electrode plate,
wherein the one or more connecting portions comprise a plurality of connecting portions included in the pattern region, and
wherein two adjacent connecting portions among the plurality of connecting portions are spaced apart from each other in the first direction by one of the one or more cutout portions.

12. The electrode assembly for the secondary battery according to any one of claims 9 to 11, wherein each of the plurality of connecting portions has a width defined by a length based on the first direction and a height defined by a length based on a direction perpendicular to the first direction.

13. The electrode assembly for the secondary battery according to any one of claims 9 to 12, wherein when a current greater than or equal to a predetermined reference current value passes through the first uncoated portion, at least one of the plurality of connecting portions is disconnected.

14. The electrode assembly for the secondary battery according to any one of claims 9 to 13, wherein a value A defined by Relational Formula 1 is from 1.89×10⁷ A/m to 4.25×10⁷ A/m: $A = \frac{L \times I}{c \times f} ,$ where L is a height of each of the plurality of connecting portions, c is a thickness of the first electrode plate in the pattern region, f is a sum of widths of the plurality of connecting portions, and I is a reference current value.

15. A secondary battery comprising the electrode assembly for the secondary battery according to any one of claims 9 to 14.
